# EUROPÄISCHE PATENTSCHRIFT

(11) **EP 2 164 660 B1**
(45) Veröffentlichungstag und Bekanntmachung des Hinweises auf die Patenterteilung: **01.02.2012**
(21) Anmeldenummer: 08758121.1
(22) Anmeldetag: 27.05.2008
(51) Int. Cl.: B23B 27/10, B23B 27/16, B23B 29/04, B23Q 11/10

(54) **WERKZEUGHALTER MIT SCHNEIDEINSATZ**
TOOL HOLDER WITH CUTTER INSERT
PORTE-OUTIL AVEC PLAQUETTE DE COUPE

(30) Priorität: 17.07.2007 DE 202007009943 U
(43) Veröffentlichungstag der Anmeldung: 24.03.2010
(73) Patentinhaber: Kennametal Inc., Latrobe, PA 15650-0231 (US)
(72) Erfinder: STORCH, Helmut, 91541 Rothenburg o.d. Tauber (DE); LINDNER, Gregor, 65795 Hattersheim (DE)
(74) Vertreter: Vomberg, Friedhelm
(86) Internationale Anmeldenummer: PCT/DE2008/000881
(87) Internationale Veröffentlichungsnummer: WO 2009/010027

(56) Entgegenhaltungen:
- DE-A1- 3 740 814
- US-A- 4 848 198
- US-A- 5 901 623

## Beschreibung

Die Erfindung betrifft einen Werkzeughalter mit einem lösbar befestigten Schneideinsatz sowie einer Kühlschmiermittelzufuhr und einem Klemmdeckel mit einer Kühlmitteleinlassöffnung, in die die Kühlmittelzufuhr des Werkzeughalters mündet.

Kühlmitteln bzw. Kühlschmiermitteln kommt bei Zerspanungsprozessen eine erhebliche Bedeutung zu. Beim Zerspanen, zu dem Drehen, Fräsen und Bohren zählen, kommt es an der aktiven Schneidkante, welche den Span von dem Werkstück abhebt, zu hohen Temperaturen, die den Verschleiß des Werkzeuges (Schneideinsatzes) beschleunigen. Der Grund für die Temperaturerhöhung an der Werkzeugschneide liegt darin, dass die spezifische Wärme sowie die Wärmeleitfähigkeit des Schneideinsatzwerkstoffes nicht ausreichen, um die entstehende Reibungswärme in hinreichendem Maße abzuführen. Bei der Zerspanung von Titanwerkstücken kommt noch hinzu, dass der Werkstoff Titan dazu neigt, sich mit dem Werkzeug zu verschweißen. Eine solche "Klebneigung" kann ebenfalls mit einem Kühlschmierstoff - im Folgenden kurz als Kühlmittel bezeichnet- verhindert bzw. minimiert werden. Um ein Kühlmittel in ausreichender Menge an den Zerspanungsort zu bringen, sind bereits verschiedene Maßnahmen vorgeschlagen worden.

So wird in der DE 37 40 814 A1 vorgeschlagen, dass der Werkzeughalter und der Schneideinsatz zur Kühlmittelbenetzung des Schneiden- und Spanflächenbereiches des Schneideinsatzes mit innerhalb der Anlageflächen dieser beiden Bauteile ineinander mündenden Kühlmittelkanälen versehen wird und dass mindestens ein Kühlmittelkanal des Schneideinsatzes in unmittelbarer Nähe der in Schneidstellung befindlichen Schneide in die Spanfläche mündet. Um dies zu bewirken, wird vorgeschlagen, dass die Spanfläche des Schneideinsatzes selbst mit Nuten versehen wird, über welche das Kühlmittel vom Werkzeughalter in Richtung der aktiven Schneidkante geführt wird. Nach einem alternativen Vorschlag in dieser Druckschrift sollen die Schneideinsätze selbst Kühlmittelkanäle in Form von Bohrungen aufweisen, die in die Spanfläche münden. Der Nachteil einer solchen Ausgestaltung liegt darin, dass durch solche Kühlnuten die Spanflächengeometrie des Schneideinsatzes beeinträchtigt und gegebenenfalls der Spanablauf, der zum Brechen relativ kurzer Späne führen soll, gestört wird. Nuten wie Bohrungen im Schneideinsatz besitzen zudem den Nachteil, dass der Schneideinsatzkörper selbst geschwächt wird. Schließlich können solche Ausgestaltungen auch nicht gewährleisten, dass das Kühlmittel in ausreichender Menge an den Zerspanungsort geführt wird.

Andere Lösungen, wie beispielsweise in der DE 930 790 C2 beschrieben, schlagen vor, dass der Strahl eines Mittels zum Kühlen und Schmieren aus einem Düsenmundstück unter Druck und hoher Geschwindigkeit in den Raum zwischen der Freifläche des Werkzeuges und dem Werkstück an die Schneide gespritzt wird. Abgesehen davon, dass hiermit im wesentlichen nur die Freifläche des Werkzeuges, nicht jedoch die Spanfläche sowie die abgehobenen Späne mit einem Kühlmittel beaufschlagt werden, besteht noch der Nachteil, dass diese Düse an einer separaten Haltevorrichtung angeordnet ist, die ohne Verbindung zum Werkzeug bzw. Werkzeughalter steht und somit schwer justierbar ist.

In der EP 1 073 535 B1 wird vorgeschlagen, die Verwendung des höchst möglichen Druckes eines Kühlmittels möglich zu machen und es in Form von einem oder mehreren feinen Strahlen hauptsächlich zu dem Schneideinsatz und den von dem Schneideinsatz freigeschnittenen Späne zu richten. Je höher der Druck gewählt werde, der in dem Fluidstrahl verwendet wird, umso größer sei die Möglichkeit, den Fluidstrahl nicht nur für das reine Kühlen auszunutzen, sondern ebenso, um die Späne, die von dem Werkstück freigeschnitten werden, mechanisch zu beeinflussen, insbesondere mit dem Ziel, die Späne in kleinstmögliche Teilchen zu brechen. Das Kühlmittel soll bei einem definiert hohen Druck auf die Schnittstelle gerichtet werden, der oberhalb von 100 bar (10⁷Pa) liegt. Hierzu besitzt der Werkzeughalter einen Sitz für einen Schneideinsatz sowie eine angeschraubte Platte, die mindestens eine Düse aufweist, die Teil eines Düseneinsatzes ist, der um seine eigene Mittelachse gedreht werden kann und derart in einer Position fixierbar sein soll, dass ein Fluidstrahl von dieser Düse ausgehend auf die Spanfläche des Schneideinsatzes gerichtet wird. Das Kühlmittel soll über ein oder mehrere Kanäle im Werkzeuggrundhalter in eine Bohrung eines Polygonschaftes des Werkzeughalters und von dort zu der Düse in der genannten Platte weitergeleitet werden. Über die Kühlmittelführung wird im Einzelnen nichts ausgeführt. Soweit an den Austrittsstellen von Bohrungen Dichtungsringe verwendet werden sollen, besteht nachteiliger Weise die Gefahr, dass diese bei hohen Fluiddrücken oberhalb von 10⁷Pa unzureichend dicht sind. Im Übrigen ist die Einstellung der Düse relativ aufwendig und deren Fixierung nicht hinreichend sicher, so dass sich insbesondere bei aufgegebenen hohen Drücken die Strahlrichtung ändern kann.

In der US 5,340,242 wird ein Werkzeughalter für einen Schneideinsatz vorgeschlagen, bei dem abseits von dem Schneideinsatz ein Körper angeschraubt wird, der eine Durchgangsbohrung für einen Kühlmittelstrom hat. Diese Durchgangsbohrung führt zum einen in einen Werkzeughalterschaft mit einem Kühlmitteleinlass sowie zu einem kleinen Kühlmittelauslass, durch den strahlkegelförmig Kühlmittel in Richtung der aktiven Schneidkante des Schneideinsatzes gesprüht werden kann. Um die Strahlkegelrichtung einstellen zu können, ist eine Justierschraube mit einem Exzenterkopf vorgesehen. Auch hier besteht die Gefahr, dass sich die gewählte Einstellung verändert, so dass offensichtlich das Kühlmittel nur bis zu einem Druck von maximal 10 Bar aufgegeben wird. Insbesondere bei der Zerspanung von Titan-Werkstoffen treten jedoch in Folge der hohen Temperaturen an der Schneidkante Schweißeffekte zwischen dem Werkzeug (Schneideinsatz) und dem abgelösten Span auf. Der heiße Span befindet sich über eine relativ lange Strecke mit dem Werkzeug in Kontakt, wo es unter Umständen zunächst zu Ablagerungen an der Schneidkante und später zu einem Abbrechen größerer Schneidkantenstücke kommen kann. Insofern ist beim Zerspanen von Titan eine besonders gute Kühlung bzw. Wärmeabfuhr erforderlich.

Ein weiterer Werkzeughalter wird in der US 5,901,623 offenbart, an den eine externe Zuleitung für flüssiges Gas als Kühlmittel anschließbar ist. Das Kühlmittel wird über einen Kühlmittelkanal unmittelbar auf die Oberfläche des Schneideinsatzes aufgetragen.

Die US 4,848,198 die als nächstliegender Stand der Technik angesehen wird offenbart einen Werkzeughalter, in dem ein einziger Kühlmittelkanal integriert ist, über den der Schneideinsatz punktuell mit einem Kühlmittel beaufschlagt werden kann.

Es ist Aufgabe der vorliegenden Erfindung einen Werkzeughalter der eingangs genannten Art weiter zu entwickeln, der geeignet ist, einen Kühlmittelstrom in optimaler Weise auf die jeweils beim Zerspanen aktive Schneidkante zu richten. Insbesondere soll die Erfindung Vorteile bei der Zerspanung von Titan-Werkstoffen haben.

Diese Aufgabe wird durch den Werkzeughalter nach Anspruch 1 gelöst, der mehrere unmittelbar oder mittelbar über kreuzweise angeordnete Querbohrungen verbundene im Durchmesser kleinere Auslasskanäle besitzt, deren Längsachsen so gerichtet sind, dass die Verlängerungen im Bereich der Schneidecke des Schneideinsatzes so konvergieren, dass die Schneidkante im Bereich der Schneidecke an den aktiven Zerspanungsorten gleichmäßig mit dem Kühlschmiermittel beaufschlagt wird. Anstelle eines einzelnen Strahles werden somit mehrere feine Strahlen auf den Zerspanungsort gerichtet, die nadelstichartig zur Schneidkante vordringen, so dass weder umher fliegende Späne, noch am Zerspanungsort verdampfende Kühlflüssigkeit zu einer verschlechterten Kühlung führen können. Es sind mindestens zwei solcher Auslasskanäle, vorzugsweise drei oder vier Auslasskanäle vorgesehen.

Nach einer weiteren Ausgestaltung der Erfindung ist der Klemmdeckel als Klemmpratze für den Schneideinsatz ausgebildet, der über einen in eine Schneideinsatzspannmulde greifenden Klemmfinger auf dem Werkzeughalter fixiert wird. Die Ausbildung der Klemmmulde sowie des Klemmfingers ist grundsätzlich nach dem Stand der Technik ebenso wie die gegenseitige Anordnung bekannt, wobei beim Festziehen der Klemmpratze der Klemmfinger mit seiner vorderen Spitze über die Kontaktstelle in der Spannmulde den Schneideinsatz in den Werkzeugsitz des Werkzeughalters hineinpresst. Der Klemmdeckel bzw. die Klemmpratze selbst wird mit einer oder mehreren Klemmschrauben befestigt.

Die genannten Auslasskanäle haben Austrittsöffnungen mit einem Durchmesser von 0,5 mm bis 2 mm, vorzugsweise 1 mm.

Weitere Ausführungsbeispiele sowie Vorteile der Erfindung werden anhand der Zeichnungen erläutert. Es zeigen:
- Fig. 1: eine perspektivische Ansicht eines Werkzeuggrundhalters,
- Fig. 2a, b: Teilschnittansichten durch den Werkzeuggrundhalter mit Schnittebenen im Bereich einer Kühlmittelleitung,
- Fig. 3: eine teilgeschnittene Ansicht eines Werkzeughalters,
- Fig. 4a bis c: jeweils Ansichten eines Werkzeughalters mit befestigtem Klemmdeckel und
- Fig. 5a bis c: jeweils eine Ansicht eines Werkzeughalters in unterschiedlichen Darstellungen.

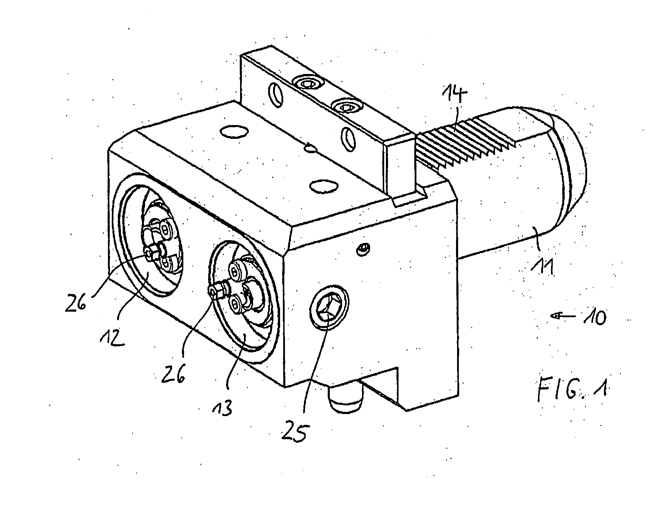

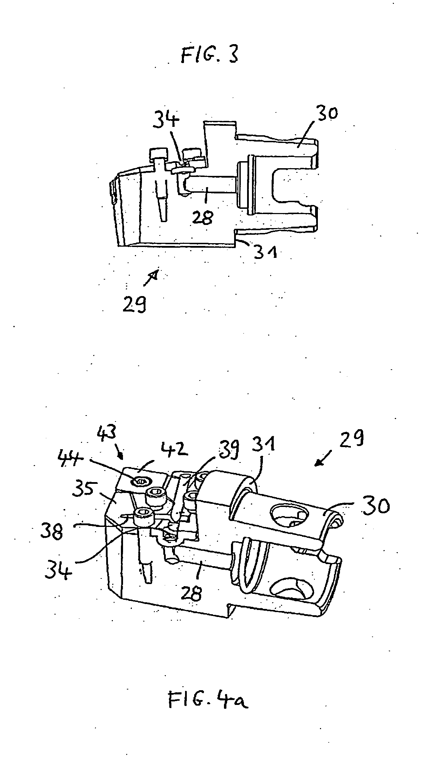

Der in Fig. 1 dargestellte Werkzeuggrundhalter 10 besitzt einen Halterungsschaft 11 sowie zwei Aufnahmebohrungen 12, 13, die zum Einschub für Werkzeugträgerschäfte ausgestaltet sind. In Betracht kommen hier insbesondere Hohlschaftskegel, wie sie den Fig. 3 bis 5 entnehmbar sind. An der Oberseite besitzt der Schaft 11 eine Rasterprofilierung 14.

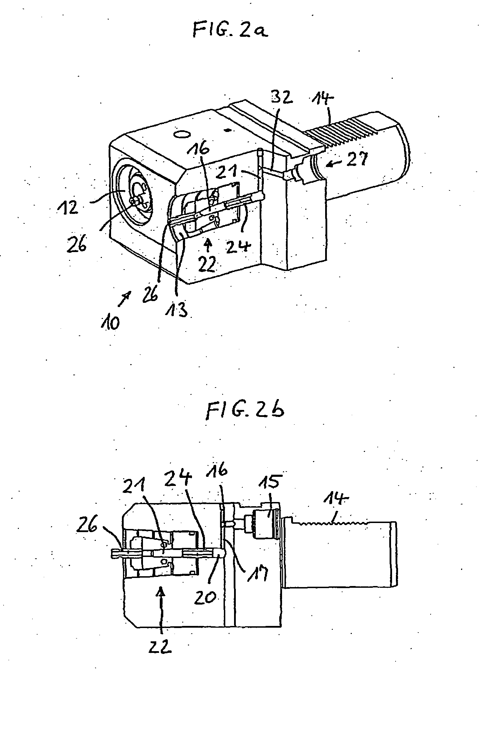

Wie teilweise aus Fig. 2b ersichtlich ist, sind an der Rückseite des Werkzeuggrundhalters 10 zwei nebeneinander liegende Öffnungen 15 vorgesehen, an denen von der Maschinenseite her Hochdruckleitungen zur Kühlmittelzufuhr angeschlossen werden können. Die Anschlüsse 15 sowie die nachfolgend beschriebene Kühlmittelzuführung ist für Drücke > 100 Bar (10⁷Pa) ausgelegt. Im Fortlauf verkleinert sich der Durchmesser gegenüber der Eintrittsöffnung 15 zu einem geringeren Maß, wonach diese Bohrung 16 schließlich in eine Querbohrung 17 mündet, die endseitig mit einem Stopfen 18 verschlossen ist. Die Querbohrung ist erforderlich, um den Kühlmittelstrom seitwärts aus dem Bereich der Spannvorrichtung herauszuführen. Diese Querbohrung 17 mündet in einer Längsbohrung 20, welche durch einen Kanister 22 führt, der auch eine Spannvorrichtung trägt, bei der beispielsweise als Spannelemente Kugeln verwendet werden, die über Spannschrauben 25 unter Vermittlung eines kegelförmigen Abschnittes betätigbar sind und dazu dienen, den Schaft 30 so zu spannen, dass die jeweiligen Plananlageflächen rings um die Aufnahme 12, 13 des Werkzeuggrundhalters und die ringförmige Plananlagefläche 31 des Werkzeughalters aneinander liegen bzw. beim Spannen aneinander geführt werden.

Die Kühlmittelbohrung 20 ist endseitig mit einem Rohrkörper 24 verbunden, der über ein Außengewinde sowohl mit dem Werkzeuggrundhalter 10 als auch mit dem Kanister 22 verbunden ist. Der Rohrkörper 24 mündet in eine Bohrung 21, die wiederum in einen weiteren Rohrkörper 26 mündet, der über ein Außengewinde verfügt, das in betreffende Innengewinde der vorhandenen Bohrungen im Werkzeuggrundhalter 10 und Werkzeughalter 29 eingeschraubt wird. Auf diese Weise wird bei der Kühlmittelleitung 20 am Übergang zum Kanister 22 bzw. vom Kanister 22 zum Werkzeughalter 29 der vorhandene hohe Kühlmitteldruck abgefangen, so dass beispielsweise bei dem Kanister auf handelsübliche Bauteile zurückgegriffen werden kann.

Der Werkzeuggrundhalter 10 besitzt jedoch zudem einen weiteren Anschluss 27 für eine Niederdruck-Kühlmittelaufgabe, der in die Kühlmittelführung 21 bzw. ein entsprechendes Rohrstück 24 über eine Querbohrung 32 mündet. Der Anschluss 27 ist über einen Stopfen verschließbar.

Die Kühlmitteleinlassöffnungen 15 können jeweils separat mit einem entsprechenden Kühlmittel-Hochdruck beaufschlagt werden, so dass der Kühlmitteldruck dem Bedarfszweck angepasst werden kann.

Der Verlauf der Kühlmittelführung 20, 21 einschließlich der Querführung ist im Wesentlichen dadurch bestimmt, dass die nicht dargestellten Spannschrauben "umgangen" werden müssen. Auf diese Art und Weise kann der Werkzeuggrundhalter kompakt gebaut werden.

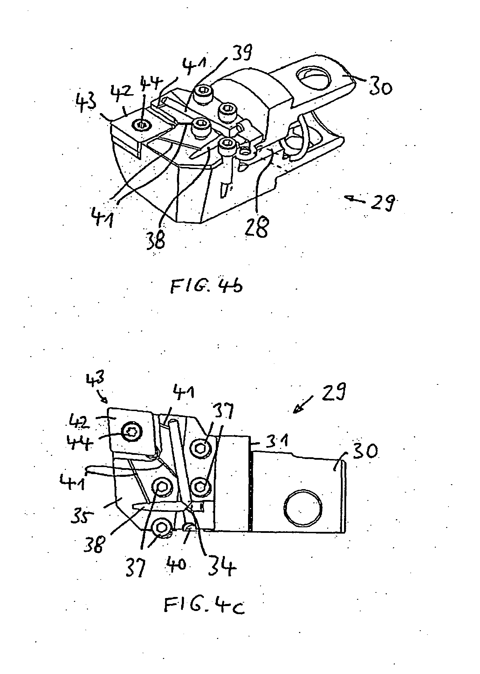

Im Werkzeughalter 29 wird über die Kühlmittelleitung 28 sowie eine Querbohrung das Kühlmittel zu einem Auslass 34 geleitet, der unterhalb des Klemmdeckels 35 (siehe Fig. 4) oder einer Klemmpratze 36 mündet. Der Klemmdeckel 35 ist auf dem Werkzeugträger mit vier Spannschrauben 37 befestigt. Der Klemmkörper besitzt zwei sich kreuzende Bohrungen 38, 39, die sich an einem gemeinsamen Kreuzungspunkt schneiden, wobei die Bohrungen in Verbindung mit der Austrittsöffnung 34 stehen, so dass das dort austretende Kühlmittel in die Bohrungen 38 und 39 gelangen kann. Aus fertigungstechnischen Gründen sind die "blinden Enden" der Bohrungen durch Stopfen 40 jeweils verschlossen. Von den Bohrungen 38 und 39 gehen schmale Kanäle 41 mit einem Durchmesser von 1 mm ab, deren Längsachsen so gerichtet sind, dass die Verlängerung im Bereich der Schneidecke eines Schneideinsatzes 42 so konvergieren, dass die Schneidkante im Bereich der Schneidecke 43 an den aktiven Zerspanungsorten gleichmäßig mit einer Kühlmittelflüssigkeit beaufschlagt wird. Der Schneideinsatz 42 ist in bekannter Weise mittels einer Spannschraube 44 befestigt. Die Kühlmittelzufuhr gelangt somit in geschützter Weise von der Werkzeugmaschine über den Werkzeuggrundhalter und den Werkzeughalter zur Schneidecke 43 eines Schneideinsatzes 42, wo der Kühlmittelstrom in drei durchmesserkleine Strahlen aufgeteilt wird. Diese Kühlmittelstrahlen können sowohl zur Temperaturminimierung an der Schneidkante als auch zur Beeinflussung des Spanablaufes bzw. dem Spanbruch dienen.

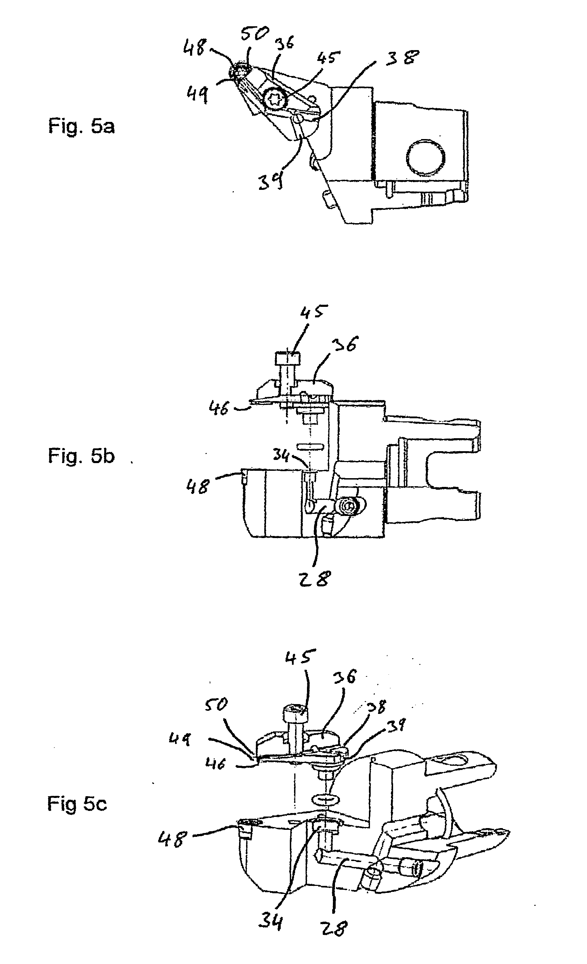

Die Ausführungsform nach den Figuren 5 a, b und c unterscheidet sich im Wesentlichen dadurch, dass der Klemmdeckel als Klemmpratze 36 ausgestaltet ist. Die Figur 5a zeigt den erfindungsgemäßen Werkzeughalter 29 in einer Draufsicht. Die Figuren 5b und 5czeigen hingegen den Werkzeughalter 29 in einer Seitenansicht (vgl. Fig. 5b) bzw. perspektivisch (vgl. Fig. 5c) in einer Explosivdarstellung. Bei dieser Ausführungsform wird die Klemmpratze mittels einer Klemmschraube 45 auf dem Werkzeughalter befestigt, wobei die Klemmpratze 36 einen Klemmfinger 46 besitzt, der in eine Spannmulde eines Schneideinsatzes 48 eingreift und diesen in den Sitz für den Schneideinsatz presst. Die sich kreuzenden Kanäle 38 und 39 münden zur Seite, die dem Schneideinsatz 48, der im vorliegenden Fall eine kreisrunde Schneidkante besitzt, zugewandt ist, in zwei Paare von Kanälen 49, 50, die unter einem geringen Winkel zur Auslassöffnung leicht divergierend jeweils auseinander laufen. Insgesamt werden über die vorderen Austrittsöffnungen 49, 50 an der Klemmpratze 36 vier Kühlmittelstrahlen erzeugt, die einen bogenförmigen Bereich von ca. 90 bis 130° abdecken.

Die Ausrichtung der Kanäle 41 bzw. 49 und 50 wird jeweils so gewählt, dass die austretenden Kühlmittelstrahlen in Abhängigkeit von der Geometrie des einzusetzenden Schneideinsatzes zielgerichtet an den Ort der Spanbildung gelangen. Die Klemmpratze bzw. der Klemmdeckel sind fest mit dem Werkzeughalter verbunden, so dass eine Fehlausrichtung der Kühlmittelstrahlen ausgeschlossen ist.

Der Werkzeughalter 29 kann insbesondere so ausgebildet sein, dass wahlweise entweder der Klemmkörper nach Fig. 4a bis 4c oder die Klemmpratze 36 nach einem der Figuren 5a bis c montiert werden kann.

## Patentansprüche

1. Werkzeughalter mit einem lösbar befestigten Schneideinsatz (42, 48) sowie einer Kühlschmiermittelzufuhr (28) und einem Klemmdeckel (35, 36) mit einer Kühlmitteleinlassöffnung (34), in die die Kühlschmiermittelzufuhr des Werkzeughalters mündet,
**gekennzeichnet durch**
mehrere unmittelbar oder über kreuzweise angeordnete Querbohrungen (38, 39) mittelbar verbundene im Durchmesser kleinere Auslasskanäle (41; 49, 50), deren Längsachsen so gerichtet sind, dass die Verlängerungen im Bereich der Schneidecke des Schneideinsatzes so konvergieren, dass die Schneidkante im Bereich der Schneidecke an den aktiven Zerspanungsorten gleichmäßig mit dem Kühlschmiermittel beaufschlagt wird.

2. Werkzeughalter nach Anspruch 1, **dadurch gekennzeichnet, dass** mindestens 2, vorzugsweise 3 oder 4 Auslasskanäle vorgesehen sind.

3. Werkzeughalter nach Anspruch 1 oder 2, **dadurch gekennzeichnet, dass** der Klemmdeckel als Klemmpratze (36) für den Schneideinsatz (48) ausgebildet ist, der über einen in eine Schneideinsatzspannmulde greifenden Klemmfinger auf dem Werkzeughalter lösbar fixiert ist.

4. Werkzeughalter nach einem der Ansprüche 1 bis 3, **dadurch gekennzeichnet, dass** der Durchmesser der Auslasskanäle (41; 49, 50) 0,5 mm bis 3 mm, vorzugsweise 1 mm beträgt.

## Claims

1. Tool holder comprising a detachably fastened cutting insert (42, 48) and a cooling lubricant feed (28) and a clamping lid (35, 36) with a coolant inlet opening (34), into which the cooling lubricant feed of the tool holder opens, **characterized by** a plurality of outlet passages (41; 49, 50) which are directly connected or are indirectly connected via transverse bores (38, 39) arranged crosswise and which are of smaller diameter and the longitudinal axes of which are directed in such a way that the extensions in the region of the cutting corner of the cutting insert converge in such a way that the cooling lubricant is admitted uniformly to the cutting edge in the region of the cutting corner at the active cutting locations.

2. Tool holder according to Claim 1, **characterized in that** at least two, preferably three or four outlet passages are provided.

3. Tool holder according to Claim 1 or 2, **characterized in that** the clamping lid is designed as a clamping shoe (36) for the cutting insert (48), which can be detachably fixed on the tool holder via a clamping finger which engages in a cutting-insert clamping depression.

4. Tool holder according to one of Claims 1 to 3, **characterized in that** the diameter of the outlet passages (41; 49, 50) is 0.5 mm to 3 mm, preferably 1 mm.

## Revendications

1. Porte-outil comprenant une plaquette de coupe (42, 48) fixée de manière desserrable ainsi qu'une alimentation en lubrifiant de refroidissement (28) et un couvercle de serrage (35, 36) avec une ouverture d'entrée de réfrigérant (34), dans laquelle débouche l'alimentation en lubrifiant de refroidissement du porte-outil,
**caractérisé par**
plusieurs canaux de sortie (41 ; 49, 50) de relativement petit diamètre connectés directement ou indirectement par le biais d'alésages transversaux (38, 39) disposés en croix, dont les axes longitudinaux sont orientés de telle sorte que les prolongements convergent dans la région des coins de coupe de la plaquette de coupe de telle sorte que l'arête de coupe soit sollicitée de manière uniforme avec le lubrifiant de refroidissement dans la région des coins de coupe aux endroits d'enlèvement actif de copeaux.

2. Porte-outil selon la revendication 1, **caractérisé en ce qu'**au moins 2, de préférence 3 ou 4 canaux de sortie sont prévus.

3. Porte-outil selon la revendication 1 ou 2, **caractérisé en ce que** le couvercle de serrage est réalisé sous forme de griffe de serrage (36) pour la plaquette de coupe (48), qui est fixée de manière amovible sur le porte-outil par le biais d'un doigt de serrage venant en prise dans un creux de serrage de la plaquette de coupe.

4. Porte-outil selon l'une quelconque des revendications 1 à 3, **caractérisé en ce que** le diamètre des canaux de sortie (41 ; 49, 50) est de 0,5 mm à 3 mm, de préférence de 1 mm.
